# EUROPÄISCHE PATENTSCHRIFT

(11) **EP 1 032 782 B1**
(45) Veröffentlichungstag und Bekanntmachung des Hinweises auf die Patenterteilung: **06.05.2004**
(21) Anmeldenummer: 98952489.7
(22) Anmeldetag: 13.11.1998
(51) Int. Cl.: F16J 13/10

(54) **SCHNELLVERBINDUNGSANORDNUNG FÜR HOHLKÖRPER**
QUICK RELEASE COUPLING DEVICE FOR HOLLOW BODY
DISPOSITIF DE FIXATION RAPIDE POUR CORPS CREUX

(30) Priorität: 21.11.1997 CH 269397
(43) Veröffentlichungstag der Anmeldung: 06.09.2000
(73) Patentinhaber: Simson Innovationen, 8405 Winterthur (CH)
(72) Erfinder: SIMSON, Dionizy, CH-8405 Winterthur (CH)
(74) Vertreter: Heubeck, Bernhard
(86) Internationale Anmeldenummer: PCT/CH1998/000491
(87) Internationale Veröffentlichungsnummer: WO 1999/027280

(56) Entgegenhaltungen:
- CH-A- 403 724
- FR-A- 1 474 846
- FR-A- 2 022 252
- FR-A- 2 488 968
- GB-A- 2 134 206
- US-A- 2 611 505
- US-A- 2 869 910

## Beschreibung

Die Erfindung betrifft eine Schnellverbindungsanordnung gemäss dem oberbegriff des Anspruches 1 und eine Vorrichtung zur Herstellung der Schnellverbindung.

Es sind Verbindungssysteme bekannt, welche an trennbare Hohlkörper angebrachte, ringförmige Flansche mittels herkömmlicher Schrauben oder Bügelschrauben kraftschlüssig miteinander verbinden. Diese Systeme haben die Nachteile, dass ein beträchtlicher Zeitaufwand für das jeweilige Festlegen und Lösen einer Anzahl von Schrauben erforderlich ist. Weiterhin ist der Bajonettverschluß bekannt Dieser besteht aus einem ringförmigen Flansch mit Aussparungen am Umfang und einem ringförmigen Gegenflansch mit Vorsprüngen, die in die Aussparungen eingeführt werden. Durch gegenläufiges Verdrehen der Hohlkörper um die Breite der eine Aussparung wird eine formschlüssige Verbindung zwischen den trennbaren Hohlkörpern hergestellt. Als nachteilig erweisen sich hier die hohen Herstellungskosten und die Notwendigkeit, die Hohlkörper oder einen separaten Ring um die Rotationsachse zu drehen. Ebenfalls bekannt sind Systeme mit verzahnten Segmenten, welche von innen oder von aussen in entsprechende Rillen an den Hohlkörpern durch Keile oder Steuerringe eingeschoben werden (White

US 4823976, Rexroth DE 1475128, Klepper DE 717229, Sulzer EP 0513466A1, Nippon Steel DE 3932225A1). Andere Lösungen basieren auf radial verschiebbaren Klammersegmenten (Babcock DE 1050139, Uhde EP 0093878, ABB WO93/19311, Uhde DE 4102622A1, Inteco DE 3721942A1). Diese Systeme weisen eine Anzahl aufwendiger und sperriger Teile auf, welche zusätzlich dem Erfordernis der Reinhaltung nicht entsprechen. Ebenso sind Verbindungen bekannt, bei welchen elastisch verformbare Ringe als Kraftübertragungselement eingesetzt werden. Diese können im Querschnitt die Form eines Rundstabes (R. Bosch: FR 2678027A3, Messerschmitt-Bölkow-Blom: DT 2623937A1), einer Klammer (Scholz DE 3421907C1) oder eines Flachstabes (General Descaling EP 0129349A2, Mondo CH 525 415) aufweisen. Obwohl runde Stäbe sehr kostengünstig und platzsparend sind, eignen sich aber nur für kleinere Belastungen, da die Auflageflächen sehr ungleichmässig belastet sind. In einer U-förmigen Klammer verursachen die zu übertragenden Kräfte Biegespannungen, so dass der Querschnitt des Ringes gross ausgelegt werden muss und daher der Spreizmechanismen entsprechende stark ausgebildet sein muss. Zudem fehlt bei den elastisch verformbaren Kraftübertragungselementen eine Sicherung gegen ungewolltes Öffnen (Uhde DE 4102662A1).

Es ist bekannt einen Druckbehälter und einen Deckel mit einer Anordnung zu versehen, welche sich relativ schnell und einfach Festlegen und Lösen lässt, um den Druckbehälter zu schliessen bzw. zu öffnen. Eine derartige Anordnung ist aus der DE-A 39 32 225 bekannt. Diese Anordnung umfasst eine ringförmige Nut, die an der Innenseite des Behälters ausgebildet ist, einen Vorsprung, der am Deckel ausgebildet ist und eine Mehrzahl von segmentartigen Halteelementen, die zu einem Haltering zusammenstellbar sind und welche die durch den Innendruck erzeugten Kräfte aufzunehmen, um die Behälterteile kraft- oder formschlüssig zu verbinden. Als nachteilig erweist sich die Anordnung zum Halten des Deckels.

Eine Verbindungsanordnung der eingangs genannten Art ist aus der CH-A-403 724 bekannt, welche einen Verschluss für einen Autoklaven offenbart. der einen Behälter mit einem Ringflansch, einen Deckel mit einem in den Ringflansch einsetzbaren Ring und einen offenen Schliessring mit rechteckigem Querschnitt aufweist. Am Aussenumfang des Ringes ist eine Ringnut mit rechteckförmigem Querschnitt ausgebildet, die bei eingesetztem Deckel einer entsprechenden. am Innenumfang des Ringflansches ausgebildeten Ringnut gegenüberliegt und mit dieser fluchtet. Der Schliessring ist durch Spreizen seiner freien Enden vollständig in die Ringnut des Ringflansches einsetzbar. um den Deckel in den Ringflansch einzusetzen bzw. den Behälter zu öffnen, und ist durch Zusammenziehen seiner Enden in eine Lage bewegbar, in welcher er sowohl in die Ringnut des Ringflansches als auch in die Ringnut des Deckelringes eingreift. um den Behälter mit dem Deckel zu verschliessen. Hierzu ist eine Betätigungsvorrichtung mit zwei über einen Handhebel und eine Zahnradanordnung gegensinnig verschwenkbaren Hebeln vorgesehen, welche mit zwei je an einem der Enden des Schliessringes befestigten Führungszapfen beweglich gekoppelt sind. Die Betätigungsvorrichtung umfasst ferner ein Sperrelement zum Blockieren des Handhebels, um den Schliessring in der Schliesslage zu sichern. und ein Auslassventil. um den Innenraum des Autoklaven mit der Atmosphäre zu verbinden.

Bei geschlossenem und unter Druck stehendem Autoklaven liegt der Schliessring einerseits an den Flanken der Ringnut des Deckelringes an und wird andererseits gegen eine Flanke der Ringnut des Ringflansches gepresst. Bei unter Druck stehendem Autoklaven ist nicht völlig auszuschliessen, dass der Schliessring gespreizt wird. Um eine Fehlöffnung des bekannten Verschlusses zu verhindern, ist in der Ringnut des Ringflansches eine das Spreizen des Schliessringes begrenzende Anschlagschulter vorgesehen. Ein Nachteil dieser bekannten Anordnung wird darin gesehen. dass der Schliessring zum Herstellen der Schliessverbindung jeweils zwischen die Flanken der relativ engen Ringnut des Deckelringes eingeführt werden muss, was eine genaue Positionierung dieser Ringnut bezüglich der Ringnut des Ringflansches sowie eine entsprechende Sorgfalt beim Zusammenziehen des Schliessringes erfordert, um einen ungehinderten, klemmfreien Eingriff zu gewährleisten. Als nachteilig wird ferner die für diese Anordnung erforderliche, hinsichtlich Ausführung und Handhabung relativ aufwendige Betätigungsvorrichtung angesehen.

Ein aus der GB-A-2 134 206 bekannter Verschluss für einen Druckbehälter, der an seiner Innenseite eine Ringnut aufweist, enthält vier ringsegmentartige Verschlusselemente, die auf einem in den Behälter einsetzbaren Deckel angeordnet sind. Die Verschlusselemente sind je mit einem Ende an einem zugeordneten. auf dem Deckel gelagerten Exzenter angelenkt. Die Exzenter sind je über eine erste Verbindungsstange mit einem am Deckel angelenkten, durch einen Handhebel verschwenkbaren zentralen Halteteil gekoppelt und zudem je über eine zweite Verbindungsstange mit dem anderen Ende des jeweils benachbarten Verschlusselementes gekoppelt. Beim Verschwenken des Hebels werden die Exzenter je im gleichen Drehsinn verstellt. wobei die äusseren Randpartien der Verschlusselemente in die Nut eingeführt bzw. aus dieser herausgeführt werden. Als nachteilig wird angesehen, dass der bekannte Verschluss einen relativ aufwendigen mehrteiligen Verstellmechanismus mit entsprechend zahlreichen Lagerstellen erfordert und dass bei unter Druck stehendem Behälter, durch eine mögliche Fehlmanipulation des Hebels unter Anwendung grösserer Kräfte, die Verschlussteile versehentlich aus der Nut herausgeführt werden können.

Die Erfindung, wie sie in den Ansprüchen gekennzeichnet ist, löst die objektive Aufgabe, eine Verbindungsanordnung der eingangs genannten Art so zu verbessern. dass die vorstehend genannten Nachteile nicht auftreten.

Die mit der Erfindung erzielbaren Vorteile bestehen darin, dass eine formschlüssige Verbindung mittels einfachen und kostengünstigen Mitteln schnell hergestellt wird und dass den Anforderungen bezüglich Sicherheit und einfacher Reinhaltung entsprochen wird.

Nachfolgend wird die Erfindung anhand der beiliegenden Zeichnungen erläutert.

Es zeigen:

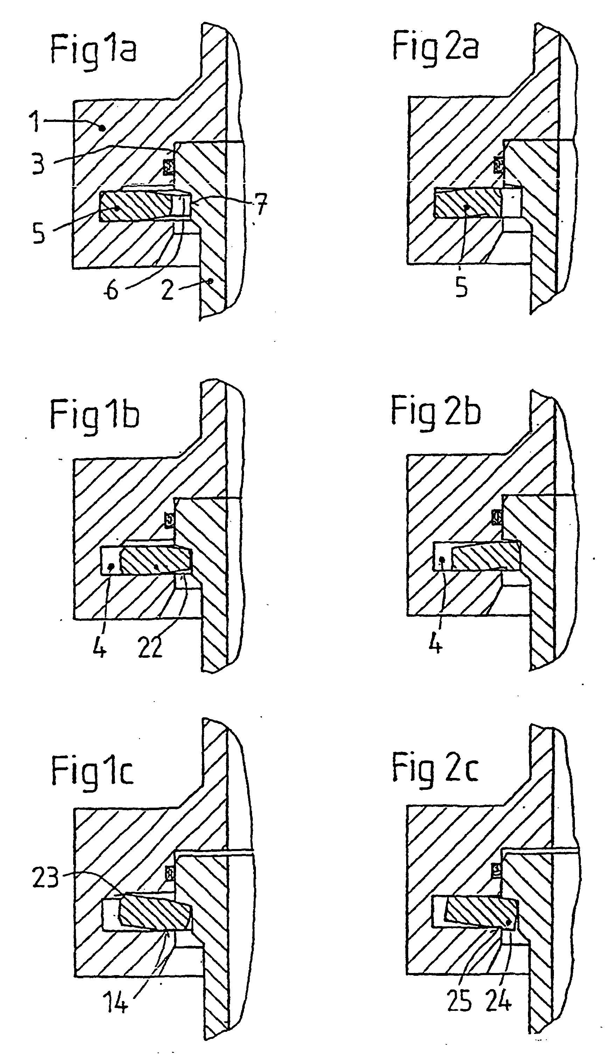

- Fig.1a bis c: eine im Schnitt entlang der Linie IV-IV in Fig.3 dargestellte erste Ausführungsform einer erfindungsgemässen Schnellverbindung in den Stellungen offen, geschlossen unbelastet und geschlossen belastet;
- Fig.2a bis c: eine zweite Ausführungsform einer erfindungsgemässen Schnellverbindung;
- Fig 3: einen Schnitt entlang der Linie II-II in Fig.5;
- Fig 4: einen Schnitt entlang der Linie III-III in Fig.5;
- Fig 5: eine erste Ausführungsform einer Vorrichtung zum Betätigen eines Schnellverschlusses;
- Fig 6: eine zweite Ausführungsform einer Vorrichtung zum Betätigen eines Schnellverschlusses;
- Fig.7: eine Einrichtung zur Einstellung des Kraftübertragungsmittels.
- Fig 8: ein elastisches Kraftübertragungsmittel mit Einkerbungen;
- Fig 9: eine erste Ausführungsform eines gelenkigen Kraftübertragungsmittels;
- Fig. 10: eine zweite Ausführungsform eines gelenkigen Kraftübertragungsmittels;

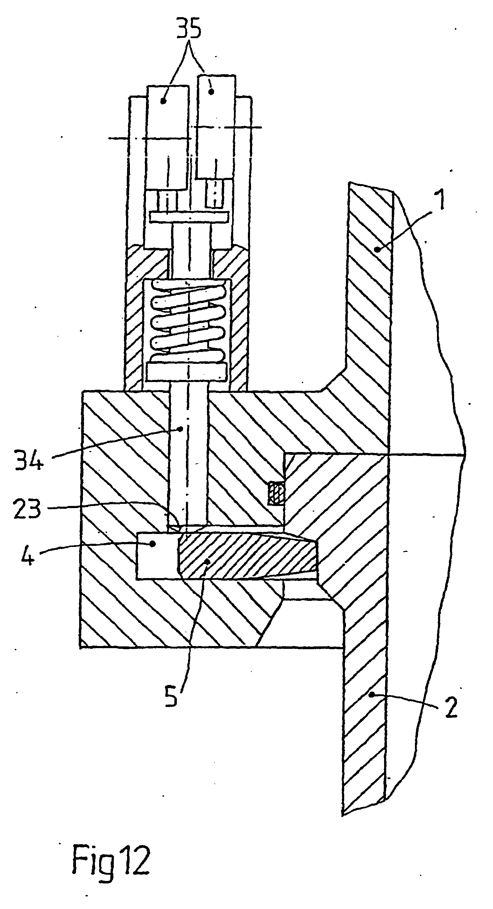

- Fig 11: eine dritte Ausführungsform eines gelenkigen Kraftübertragungsmittels und
- Fig 12: eine Einrichtung zum Überwachen der Stellung des Kraftübertragungsmittels.

Das Kraftübertragungselement 5 ist mit Vorteil als Federring ausgebildet. Dieser Federring ist ohne Vorspannung in die Nut 4 eingelegt oder mit Vorspannung an den Nutengrund 13 bzw. an den Anschlag 7 bei fehlenden Betätigungskräften angeordnet. Weitere Möglichkeiten für die Ausgestaltung des Kraftübertragungselelementes 5 sind starre Segmente, die mittels Bolzen 26 oder Klauen 27 miteinander gelenkig verbunden oder auf ein Stahlseil 28 aufgestemmt sind. Ein massives Kraftübertragungselement 5 ist mittels Einkerbungen 29 radialelastisch ausgestaltet, um die Betätigungskräfte zu verringern.

Das Kraftübertragungselement 5 kann in sehr kurzer Zeit auch von ungeübten Arbeitskräften mit einem Handgriff aus der Nut 4 entfernt werden, was für Reinigung und Sterilisierung von grosser Bedeutung ist.

Die zu verbindenden Teile des Druckbehälters 1 und 2 sind in einem kurzen Abschnitt der Trennfläche 3 ineinandergreifend angeordnet. In einem der Behälterteile 1 befindet sich eine Nut 4, in welche sich das Kraftübertragungselement 5 mindestens bündig mit der Innen- oder Aussenfläche einschieben lässt und an dem anderen Behälterteil 2 befindet sich eine Bundfläche 6 mit Anschlag 7, welche die durch den Innendruck im Behälter erzeugten Kräfte auf das Kraftübertragungselement 5 einleitet. Das Kraftübertragungselement 5 kann von innen oder von aussen an den Behälter angebracht werden. Die Trennfläche 3 der ineinander eingeschobenen Behälterteile 1 und 2 kann von der Längsachse aus gesehen kreisförmig, annähernd kreisförmig, oval, annähernd oval, polygonal mit stark gerundeten Ecken oder annähernd polygonal sein.

Das Kraftübertragungselement 5 ist ein endliches Gebilde mit zwei oder mehreren definierten und nahe beieinander liegenden Enden 8 und 9, welches sich der Form der Trennfläche ideal oder approximativ anpasst. Dieses Element kann elastisch (5) oder starr mit gelenkig verbundenen Teilen 10; 11 und 12 ausgebildet sein.

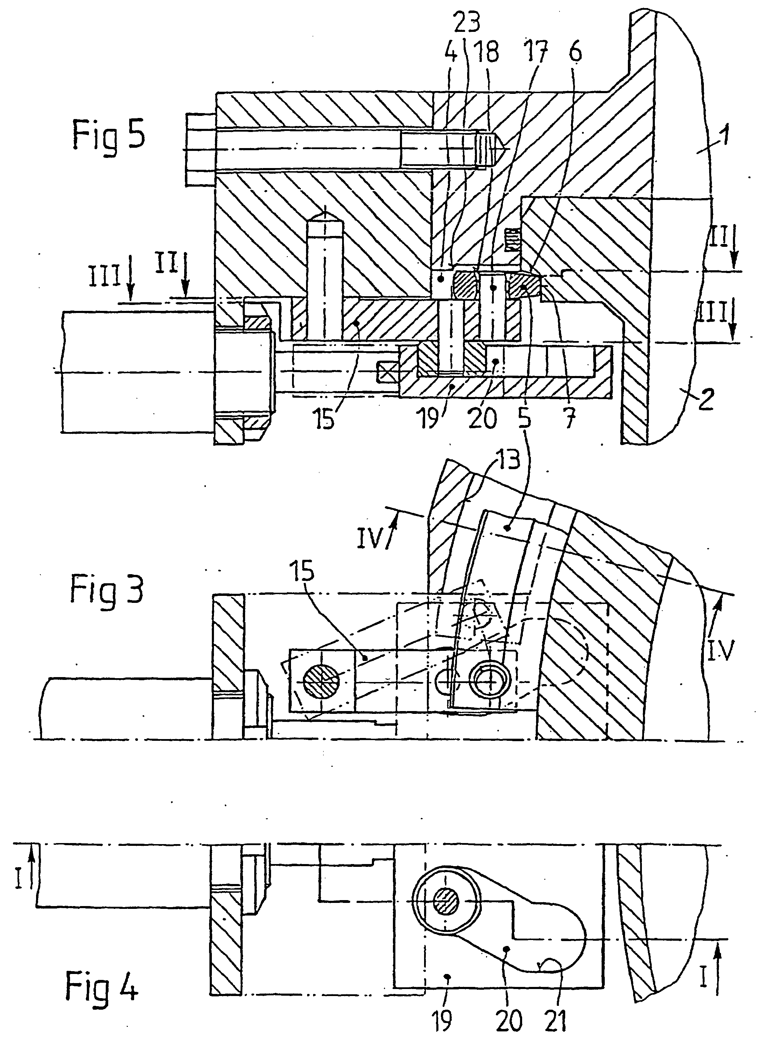

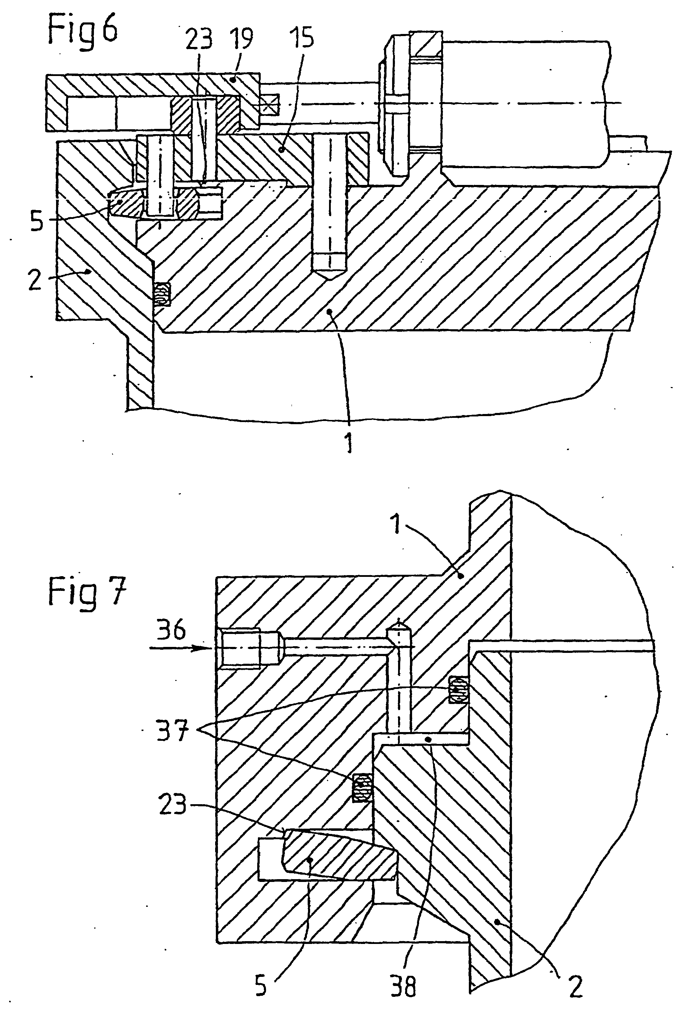

Vor dem Ineinanderschieben der Behälterteile 1 und 2 wird das Kraftübertragungselement am Grund 13 der Nut 4 durch das Spreizen bzw. das Zusammenziehen der Enden 8 und 9 in die Oeffnungsposition gebracht. Nach der Einführung der Behälterteile 1 und 2 wird das Kraftübertragungselement 5 durch Ziehen bzw. Spreizen der Enden 8 und 9 des Kraftübertragungselementes 5 bis zum Anschlag 7 an der Bundfläche 6 in Kraftübertragungsposition gebracht. Die durch den Innendruck im Behälter verursachten Kräfte werden über die Bundfläche 6 am einen Behälterteil 2 auf das Kraftübertragungselement 5 übertragen, wo sie Scherspannungen verursachen und werden auf die Schulter 14 der Nut 4 im anderen Behälterteil 1 weitergeleitet. Das Spreizen bzw. Zusammenziehen der Enden 8 und 9 des Kraftübertragungselementes 5 wird durch einen Hebelmechanismus 15 und von Hand, durch pneumatische, hydraulische oder elektrische Stellelemente (nicht dargestellt) bewerkstelligt. Die Hebel 15 sind mit Zapfen 17 versehen, welche in entsprechende Bohrungen 18 des Kraftübertragungselementes 5 eingreifen. In der Ausführung mit Hebeln 15 werden diese mittels einer Kurvenplatte 19 bewegt. In den Bahnen 20 der Kurvenplatte 19 sind in den Endstellungen Verriegelungsabschnitte 21 ausgestaltet. Das vorstehend beschriebenen Vorgehen wird mit einer aussenliegenden Betätigungvorrichtung durchgeführt (Fig. 5). Die Fig. 6 zeigt eine innenliegende Betätigungsvorrichtung, welche nach dem gleichen Prinzip ausgestaltet ist, wobei das Einsetzen bzw. Herausnehmen des Kraftübertragungselementes in entgegengesetzter Rchtung erfolgt.

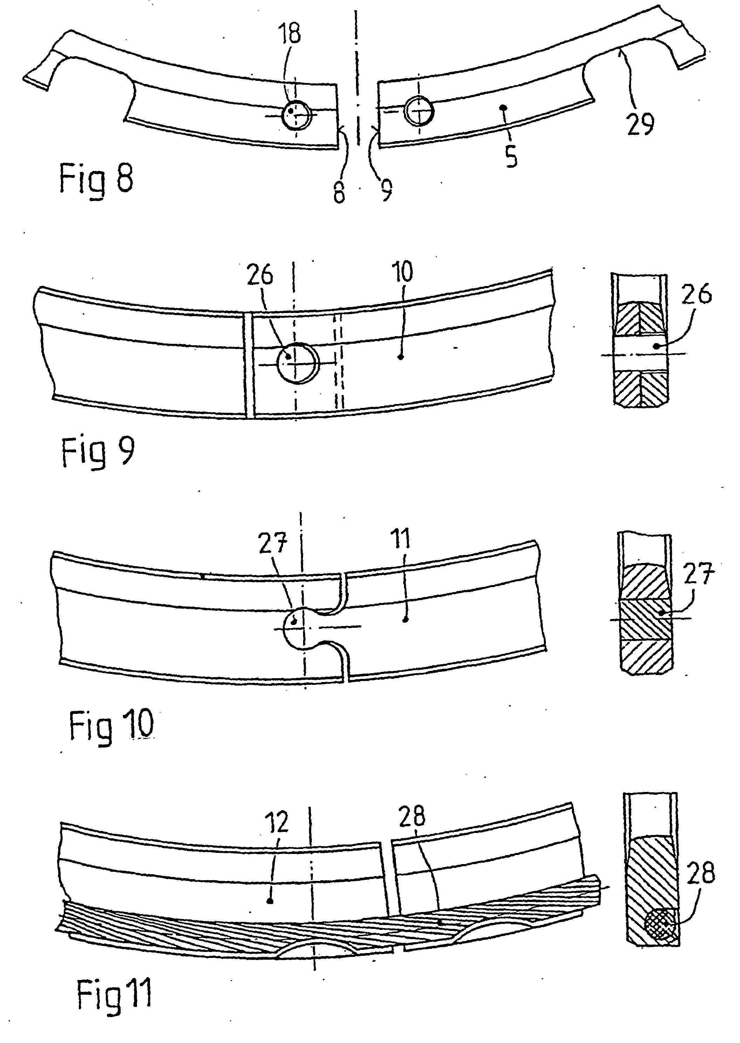

Das unter Last stehende Kraftübertragungselement 5 kann unter Anwendung grösserer Kräfte versehentlich aus der kraftübertragenden Stellung gebracht werden, da die Selbsthemmung für die absolute Sicherheit nicht ausreichend ist. Um die Funktionssicherheit zu gewährleisten, wird die Tendenz des Kraftübertragungselementes 5 unter Last zum Kippen ausgenützt. Um dies zu begünstigen, ist das Kraftübertragungselement 5 mit schrägen Flächen 22 versehen. Ein unter geringer Belastung gekipptes Kraftübertragungselement 5 verhakt sich in eine Schulter 23 der Nut 4 oder mit einer Nase 24 an der Nut kante 25, sodass es seine radiale Position nicht mehr ändern kann. Erst nach der Entlastung nimmt das Kraftübertragungselement 5 aufgrund der Federkräfte seine ursprüngliche Position ein und kann dabei eine radiale Bewegung ausführen. Für das Kippen des Kraftübertragungselementes 5 kann der Innendruck im Hohlkörper ausgenutzt werden, oder es kann mittels Fremddruck 36 in einem mit zwei Dichtungen 37 abgedichteten Ringkanal 38 bewerkstelligt werden (Fig 7).

Sterilisation ohne Ausbau des Ringes ist leicht möglich indem im verriegelten Zustand der ringförmige Spalt zwischen dem Grund 13 der Nut 4 und dem Kraftübertragungselement 5 mittels Longitudinalspülung sterilisiert werden. Die Geometrie des Kraftübertragunselementes 5 ist einfach und somit der Spannungszustand leicht berechenbar.

Für das Abfragen, ob das Kraftübertragungselement 5 sich in der kraftübertragenden Position befindet, werden in dem Behälterteil 1 bzw. 2 geeignete. Sensoren für die Lagebestimmung eingebaut. Als Beispiel solcher Ausführung werden Stifte 34 in der Nut 4 angeordnet, welche einen oder mehrere Endschalter 35 betätigen. Diese Endschalter 35 erzeugen Signale für die Freigabe der Druckbeaufschlagung des Behälters 1 und 2 sowie nach der Druckentlastung die Freigabe zum Verschieben des Kraftübertragungselementes 5 in die Oeffnungsposition.

## Patentansprüche

1. Schnellverbindungsanordnung für unter Druck stehende, teilweise ineinander greifende Hohlkörper. mit einer an der Innenseite des einen Hohlkörpers (1) ausgebildeten radialen Nut (4), mit einem an der Aussenseite des anderen Hohlkörpers (2) ausgebildeten radialen Vorsprung (6) und mindestens einem in die Nut (4) vollständig einschiebbaren und zum Verbinden der Hohlkörper (1 und 2) mit dem Vorsprung (6) in Eingriff bringbaren Kraftübertragungselement (5), wobei im Bereich einer Wand der Nut (4) eine Anschlagschulter (23, 25) vorgesehen ist, um bei unter Druck stehenden Hohlkörpern (1 und 2) das Kraftübertragungselement (5) in einer vorbestimmten radialen Position festzulegen, **dadurch gekennzeichnet, dass** das Kraftübertragungselement (5) mit mindestens einer angeschrägten Fläche (22) versehen ist, welche eine Kippbewegung des mit dem Vorsprung (6) in Eingriff befindlichen Kraftübertragungselementes (5) gegen die Wand der Nut (4) zulässt, um das Kraftübertragungselement (5) bei unter Druck stehenden Hohlkörpern (1 und 2) an der Anschlagschulter (23, 25) zu verhaken.

2. Anordnung nach Anspruch 1, **dadurch gekennzeichnet, dass** die Anschlagschulter (25) durch eine entlang dem Umfang des einen Hohlkörpers (1) verlaufende, die Nut (4) begrenzende Kante gebildet ist und dass das Kraftübertragungselement (5) mit einer an eine der Flächen anschliessenden, an die Kante anlegbaren Nase (24) ausgeführt ist. die an der Anschlagschulter (25) verhakbar ist.

3. Anordnung nach Anspruch 1 oder 2, **dadurch gekennzeichnet, dass** das Kraftübertragungselement (5) aus mindestens zwei zu einem Ring zusammensetzbaren Teilen besteht und dass die Teile starr oder elastisch sind.

4. Anordnung nach Anspruch 3, **dadurch gekennzeichnet, dass** die Teile durch mindestens ein Gelenk verbunden sind.

5. Vorrichtung zum Betätigen der Schnellverbindung nach einem der Ansprüche 1 bis 4. mit einem Halteteil, der an dem die Nut (4) enthaltenden Hohlkörper (1) befestigt ist, und zwei am Halteteil schwenkbar angeordneten Hebeln (15), die je mit einem in eine zugeordnete Bahn (20) eingreifenden Führungszapfen sowie mit dem Kraftübertragungselement (5) verbunden sind, **dadurch gekennzeichnet, dass** die Führungszapfen (17) an den Hebeln (15) angebracht sind. dass die Hebel (15) je mit einem zum Eingreifen in eine Bohrung (18) des Kraftübertragungselementes (5) bestimmten, zweiten Zapfen (17) versehen sind. der eine Kippbewegung des Kraftübertragungselementes (5) zulässt. und dass die Bahnen (20) in einer am Halteteil verstellbar angeordneten Kurvenplatte (19) ausgebildet und je mit zwei an ihren Enden ausgebildeten Verriegelungsabschnitten (21) versehen sind, um das Kraftübertragungselement (5) zusammenzuziehen oder zu spreizen und in der jeweiligen Endstellung zu verriegeln.

6. Vorrichtung nach Anspruch 5, **gekennzeichnet durch** eine Einrichtung zum Verstellen der Kurvenplatte (19).

7. Vorrichtung nach Anspruch 5, **gekennzeichnet durch** eine Kanalanordnung für ein unter.Druck stehendes Medium, um das Kraftübertragungselement (5) in die Wirkstellung zu verlagern.

8. Vorrichtung nach Anspruch 5, **gekennzeichnet durch** eine Einrichtung zur Überwachung des Kraftübertragungselementes (5), welche Einrichtung ein Abtastorgan, das mit dem Kraftübertragungselement (5) in Wirkkontakt ist, und Signalgeber aufweist, um die Stellung des Kraftübertragungselementes (5) anzugeben.

## Claims

1. A quick connection arrangement for partly interengaging hollow bodies standing under pressure into one another, comprising a radial groove (4) formed at the inside of the one hollow body (1), a radial projection (6) formed at the outside of the other hollow body (2) and at least one force transmission element (5) which can be completely inserted into the groove (4) and which can be brought into engagement with the projection (6) for the connection of the hollow bodies (1 and 2), with an abutment shoulder (23, 25) being provided in the region of a wall of the groove (4) to fix the force transmission element (5) in a pre-determined radial position with the hollow bodies (1 and 2) standing under pressure, **characterised in that** the force transmission element (5) is provided with at least one chamfered surface (22) which permits a tilting movement of the force transmission element (5) in engagement with the projection (6) towards the wall of the groove (4) in order to hook the force transmission element (5) to the abutment shoulder (23, 25) with hollow bodies (1 and 2) standing under pressure.

2. An arrangement in accordance with claim 1, **characterised in that** the abutment shoulder (25) is formed by an edge extending along the periphery of the one hollow body (1) and bounding the groove (4); and **in that** the force transmission element (5) is designed with a nose (24) which adjoins one of the surfaces, and can be placed onto the edge and can be hooked to the abutment shoulder (25).

3. An arrangement in accordance with claim 1 or claim 2, **characterised in that** the force transmission element (5) consists of at least two parts which can be put together to form a ring; and **in that** the parts are rigid or resilient.

4. An arrangement in accordance with claim 3, **characterised in that** the parts are connected by at least one joint.

5. An apparatus for the actuation of the quick connection in accordance with any one of claims 1 to 4, comprising a holding part which is secured to the hollow body (1) including the groove (4) and two levers (15) which are arranged pivotably at the holding part and which are each connected to a guide spigot engaging into an associated track (20) and to the force transmission element (5), **characterised in that** the guide spigots (17) arc attached to the levers (15); **in that** the levers (15) are each provided with a second spigot (17) designed to engage into a bore (18) of the force transmission element (5) and permitting a tilting movement of the force transmission element (5); and **in that** the tracks (20) are formed in a cam plate (19) adjustably arranged at the holding part and are each provided with two latching sections (21) formed at their ends to pull together or to spread the force transmission element (5) and to latch it in the respective end position.

6. An apparatus in accordance with claim 5, **characterised by** a device for the adjustment of the cam plate (19).

7. An apparatus in accordance with claim 5, **characterised by** a passage arrangement for a medium standing under pressure to transpose the force transmission element (5) into the active position.

8. An apparatus in accordance with claim 5, **characterised by** a device for the monitoring of the force transmission element (5), which device has a sensing member, which is in active contact with the force transmission element (5) and signal transducers to give the position of the force transmission element (5).

## Revendications

1. Dispositif de fixation rapide pour corps creux sous pression, s'engageant en partie l'un dans l'autre, comprenant une rainure (4) radiale réalisée sur le côté intérieur d'un des corps creux (1), comprenant une saillie (6) radiale réalisée sur le côté extérieur de l'autre corps creux (2) et au moins un élément de transfert de force (5) pouvant être complètement inséré dans la rainure (4) et pouvant être mis en prise avec la saillie (6) pour fixer les corps creux (1 et 2), un épaulement de butée (23, 25) étant prévu dans la zone d'une paroi de la rainure (4), afin de fixer, dans le cas de corps creux (1 et 2) sous pression, l'élément de transfert de force (5) dans une position radiale prédéterminée, **caractérisé en ce que** l'élément de transfert de force (5) est doté d'au moins une surface (22) inclinée, laquelle autorise un mouvement de basculement de l'élément de transfert de force (5) en prise avec la saillie (6) contre la paroi de la rainure (4), afin d'accrocher l'élément de transfert de force (5), dans le cas de corps creux (1 et 2) sous pression, sur l'épaulement de butée (23, 25).

2. Dispositif selon la revendication 1, **caractérisé en ce que** l'épaulement de butée (25) est formé par une arête s'étendant le long de la périphérie d'un des corps creux (1), délimitant la rainure (4) et **en ce que** l'élément de transfert de force (5) est réalisé avec un taquet (24) pouvant s'appuyer sur l'arête, se raccordant à une des surfaces, lequel taquet peut être accroché sur l'épaulement de butée (25).

3. Dispositif selon la revendication 1 ou 2, **caractérisé en ce que** l'élément de transfert de force (5) se compose d'au moins deux pièces pouvant être assemblées pour former un anneau, et **en ce que** les pièces sont rigides ou élastiques.

4. Dispositif selon la revendication 3, **caractérisé en ce que** les pièces sont reliées par au moins une articulation.

5. Dispositif d'actionnement de la fixation rapide selon l'une des revendications 1 à 4, comprenant une pièce de retenue qui est fixée sur le corps creux (1) contenant la rainure (4), et deux leviers (15) disposés de manière à pouvoir pivoter sur la pièce de retenue, lesquels sont reliés respectivement à un tourillon de guidage s'engageant dans une bande (20) associée ainsi qu'à l'élément de transfert de force (5), **caractérisé en ce que** les tourillons de guidage (17) sont aménagés sur les leviers (15), **en ce que** les leviers (15) sont dotés respectivement d'un second tourillon (17) défini pour s'engager dans un alésage (18) de l'élément de transfert de force (5), lequel tourillon autorise un mouvement de basculement de l'élément de transfert de force (5), et **en ce que** les bandes (20) sont réalisées dans une plaque courbe (19) disposée de manière réglable sur la pièce de retenue et sont dotées respectivement de deux sections de verrouillage (21) réalisées sur leurs extrémités, afin de serrer ou d'écarter l'élément de transfert de force (5) et de le verrouiller dans la position finale respective.

6. Dispositif selon la revendication 5, **caractérisé par** une installation de réglage de la plaque courbe (19).

7. Dispositif selon la revendication 5, **caractérisé par** un agencement de canaux pour un milieu sous pression, afin de déplacer l'élément de transfert de force (5) dans la position de fonctionnement.

8. Dispositif selon la revendication 5, **caractérisé par** une installation permettant de contrôler l'élément de transfert de force (5), laquelle installation est un organe palpeur qui est en contact de fonctionnement avec l'élément de transfert de force (5) et comprend un transmetteur de signaux pour indiquer la position de l'élément de transfert de force (5).
